# EUROPEAN PATENT APPLICATION

(11) **EP 3 587 004 A1**
(43) Date of publication of application: **01.01.2020**
(21) Application number: 18020284.8
(22) Date of filing: 26.06.2018
(51) Int. Cl.: B22F 3/105, B33Y 10/00, B33Y 30/00

(54) **DEVICE AND METHOD FOR COOLING A BUILD CHAMBER FOR ADDITIVE MANUFACTURING USING METAL POWDERS**

(71) Applicant: Linde Aktiengesellschaft, 80331 München (DE)
(72) Inventor: Scholz, Jürgen, 81379 München (DE); Foret, Pierre, 80796 München (DE); Bauer, Dominik, 82110 Germering (DE)
(74) Representative: Gellner, Bernd

(57) **Abstract**

A production cylinder for additive manufacturing using metal powders according to the present invention comprises a housing with a wall, a lift table with a build platform disposed inside the wall of the housing, wherein the wall of the housing and the build platform define a build space, wherein a cooling chamber of a cooling device is incorporated in the wall of the housing surrounding the build platform.

## Description

The present invention relates to a device and to a method for cooling a build chamber for additive manufacturing using metal powders.

The main differences between processes for additive manufacturing (AM) are in the way layers are deposited to create parts and in the materials that are used. Some methods melt or soften the material to produce the layers, for example selective laser melting (SLM) or direct metal laser sintering (DMLS), selective laser sintering (SLS), fused deposition modeling (FDM), or fused filament fabrication (FFF), while others cure liquid materials using different sophisticated technologies.

Selective laser sintering (SLS) is an additive manufacturing (AM) technique that uses a laser as the power source to sinter powdered material, aiming the laser automatically at points in space defined by a 3D model, binding the material together to create a solid structure. It is similar to direct metal laser sintering (DMLS). Both are instantiations of the same concept but differ in technical details. Selective laser melting (SLM) uses a comparable concept, but in SLM the material is fully melted rather than sintered, allowing different properties (crystal structure, porosity, and so on). SLS involves the use of a high power laser (for example, a carbon dioxide laser) to fuse small particles of plastic, metal, ceramic, or glass powders into a mass that has a desired three-dimensional shape. The laser selectively fuses powdered material by scanning cross-sections generated from a 3-D digital description of the part (for example from a CAD file or scan data) on the surface of a powder bed. After each cross-section is scanned, the powder bed is lowered by one layer thickness, a new layer of material is applied on top, and the process is repeated until the part is completed. Because finished part density depends on peak laser power, rather than laser duration, a SLS machine typically uses a pulsed laser.

Selective laser melting (DMLS) is a particular rapid prototyping, 3D printing, or Additive Manufacturing (AM) technique designed to use a high power-density laser to melt and fuse metallic powders together. In many SLM is considered to be a subcategory of Selective Laser Sintering (SLS). The SLM process has the ability to fully melt the metal material into a solid 3D-dimensional part unlike SLS. With selective laser melting, thin layers of atomized fine metal powder are evenly distributed using a coating mechanism onto a substrate plate, usually metal, that is fastened to an indexing table that moves in the vertical (Z) axis. This takes place inside a chamber containing a tightly controlled atmosphere of inert gas, either argon or nitrogen at oxygen levels below 100 parts per million. Once each layer has been distributed, each 2D slice of the part geometry is fused by selectively melting the powder. This is accomplished with a high-power laser beam, usually an fiber laser with hundreds of watts. The laser beam is directed in the X and Y directions with two high frequency scanning mirrors. The laser energy is intense enough to permit full melting (welding) of the particles to form solid metal. The process is repeated layer after layer until the part is complete.

Electron-beam additive manufacturing or electron-beam melting (EBM) is a type of additive manufacturing, or 3D printing, for metal parts. The raw material (metal powder or wire) is placed under a vacuum and fused together from heating by an electron beam. This technique is distinct from selective laser sintering as the raw material fuses having completely melted. Metal powders can be consolidated into a solid mass using an electron beam as the heat source. Parts are manufactured by melting metal powder, layer by layer, with an electron beam in a high vacuum. This powder bed method produces fully dense metal parts directly from metal powder with characteristics of the target material. The EBM machine reads data from a 3D CAD model and lays down successive layers of powdered material. These layers are melted together utilizing a computer-controlled electron beam. In this way it builds up the parts. The process takes place under vacuum, which makes it suited to manufacture parts in reactive materials with a high affinity for oxygen, e.g. titanium. Helium can be used for cooling purposes. The process is known to operate at higher temperatures (up to 1000 °C), which can lead to differences in phase formation though solidification and solid-state phase transformation.

Selective heat sintering (SHS) is a type of additive manufacturing process. It works by using a thermal print head to apply heat to layers of powdered thermoplastic. When a layer is finished, the powder bed moves down, and an automated roller adds a new layer of material which is sintered to form the next cross-section of the model. SHS is best for manufacturing inexpensive prototypes for concept evaluation, fit/form and functional testing. SHS is a Plastics additive manufacturing technique similar to selective laser sintering (SLS), the main difference being that SHS employs a less intense thermal print head instead of a laser, thereby making it a cheaper solution, and able to be scaled down to desktop sizes.

Direct metal laser sintering (DMLS) is an additive manufacturing metal fabrication technology, occasionally referred to as selective laser sintering (SLS) or selective laser melting (SLM), that generates metal prototypes and tools directly from computer aided design (CAD) data. It is unique from SLS or SLM because the process uses a laser to selectively fuse a fine metal powder. DMLS uses a variety of alloys, allowing prototypes to be functional hardware made out of the same material as production components. Since the components are built layer by layer, it is possible to design organic geometries, internal features and challenging passages that could not be cast or otherwise machined. DMLS produces strong, durable metal parts that work well as both functional prototypes or end-use production parts. The DMLS process begins with a 3D CAD model whereby a .stl file is created and sent to the machine's computer program. The DMLS machine uses a high-powered 200 watt Yb-fiber optic laser. Inside the build chamber area, there is a material dispensing platform and a build platform along with a recoater blade used to move new powder over the build platform. The technology fuses metal powder into a solid part by melting it locally using the focused laser beam. Parts are built up additively layer by layer, typically using layers 20 to 50 micrometers thick.

In General additive manufacturing is a manufacturing technology that includes a methodology whereby a heat source melts a feedstock of material which is deposited onto a substrate. Computer control of the movement of the heat source, and the source of the feedstock, makes it possible to build complex components. In additive manufacturing the processing is not limited to the above-mentioned methods in which metal powders are processed but composites or polymers are processed. The heat source can include (but is not limited to) the already mentioned laser beam, an arc, or other plasma-based heat sources.

Due to the fact that a heat source is used even when melted polymers are printed or melted by the heat source, and due to the fact that melted liquid phase is present in any case during the manufacturing of the components, heat slowly builds up in the components until equilibrium is reached between heat insertion and cooling. The stored heat in the component can have detrimental effects, for example on the metals or the polymers which are used and may have detrimental effects on the appearance or form of the component or on the chemical or physical properties of the material of the component.

If the heat in the built-up components or material cannot be removed as required by the specific material properties, the current solution in the state of the art for this problem is to stop the additive manufacturing process and wait until the component or the material has cooled down to an acceptable temperature.

This makes the process less productive and increases the risk from material discontinuities. For example the surface of the material or the surface of the particles which are melted down may change, for example micro layers of oxidation can occur or the surface activity of the particles or material can change according to the break in the production process.

Further, in additive manufacturing three-dimensional parts with different wall thicknesses can be achieved but in these parts it is likely, that the heat dissipation in the component will vary because of the different thicknesses. This may change the melting conditions for the powder or wire at these specific working points or - due to the different cooling or heat dissipation rates - areas occur which are already solid and other areas are still liquid or near to a liquid phase. This may lead to unstable processing conditions or unstable parts or components vary properties pertaining to chemical, physical or mechanical properties of the parts. In an ideal process already built-up components should have the same temperature all across the working area.

The built platform in laser-powdered bed fusion is mostly a metal plate of about 50 mm thickness where the additive manufactured parts/components are processed.

The built platform is at process temperature (room temperature at the start and then elevated temperature tool due to the ongoing process and the molten metal).

There are options to have a heated platform to avoid the torsions, for example this Ti64 or AISiMg alloys. The platform is then heated from the bottom, more or less uniformly, to temperature like 200°C.

For regular materials, it is often not wished to have an active cooling of the platform during process.

It is an object of the present invention to provide a device and a method for an improved controlling of the temperature in a build space for additive manufacturing.

It is a further object of the present invention to provide a device and a method for an improved controlling of the process of additive manufacturing.

One or more of these problems are solved by a device according to independent claims 1 and 6 and by a method according to independent claim 7. Advantageous embodiments are defined in the sub claims.

Production cylinder for additive manufacturing using metal powders comprising
- a housing with a wall,
- a lift table with a build platform disposed inside the wall of the housing,
- wherein the wall of the housing and the build platform define a build space, and wherein a cooling chamber of a cooling device is incorporated in the wall of the housing surrounding the build platform.

By using a cooling device according to the present invention it is possible to increase and control a cooling speed of the material.

The build-up of heat stock in the component during the manufacturing process may lead to a very high temperature within the component which can result in distortion and oxidation due to small residual oxygen molecules in the gas in the chamber or from oxygen in the air surrounding the process or, if it does not takes place in a chamber, from ambient air or from residual oxygen molecules in the feedstock, for example a metal powder. It can also cause thermally induced changes in the process, which can also lead to distortion, porosity or other adverse effects. During the build process, the component ist passively cooled by natural convection in the surrounding gas (air, or an inert gas), but this cooling is often insufficient as is evident from the heat build-up.

With the device according to the present invention it is advantageous that it is possible to reduce the heat build-up in components during the additive manufacturing process because of the cooling of the build space.

The invention makes it possible to precisely manage the thermal processes by controlling the temperature in the build space and thereby the built up component.

Using the cooling device, it is possible to extract the heat from the built up component. This allows a narrow temperature window on the component, ensuring more reproducible melting conditions.

The cooling of the build space makes the process more productive and reduces the risk from material discontinuities. Furthermore the risk is significantly reduced that for example the surface of the material or the surface of the particles which are melted down may change, because micro layers of oxidation can occur or the surface activity of the particles or material can change according to the break in the production process.

Attempts to cool a component during manufacturing via e.g. nozzels for providing a cold gas flow or cryogenic gases directly to the component have turned out to be disadvantageous. For applications using an inert gas atmosphere but also for other additive manufacturing techniques turbulences in the area of the component have to be avoided. Any additional nozzle injecting cold gases or particles or fluids into the process gas atmosphere has a negative influence on the production process.

Thus the use of additional cooling flows has to be carried out spaced apart from the area in which the component is manufactured because these flows have a negative influence on the flow of process gas which leads to a instability oft the welding process and corresponding defects.

All these problems are avoided or at least reduced with a device according to the present invention.

The device according to the present invention can be used with devices for additive manufacturing using laser or plasma as heat source, especially in laser powder bed fusion.

The cooling chamber of the cooling device can be embodied as a confined cooling space and/or a cooling duct and/or a cooling coil and wherein the cooling chamber of the cooling device is connected to a supplying unit for providing a cooling medium.

A further cooling chamber can be incorporated in the build platform and/or in the lift table.

The cooling medium can be liquid nitrogen, liquid argon, liquid helium, liquid hydrogen dry ice or liquid carbon dioxide or argon or a cold gas or a forming gas which is a mixture from nitrogen (N₂) or argon (Ar) and hydrogen (H₂).

According to the present invention the cooling medium has a temperature difference ΔT greater than 20 Kelvin preferably greater than 40 Kelvin or greater than 50 Kelvin compared with room temperature when using a cold gas, wherein the cooling medium has a temperature difference ΔT from 30 Kelvin to 200 Kelvin when using the cooling media supplied in liquid form with respect to the temperature in the process chamber during manufacturing. A cold gas can be provided by cooling the gas via an external cooling device below room temperature.

The metal powder is preferably an amorphous metal. There are always many challenges that need to be solved. The inventors of the present invention have realized for the first time that one of them is need for amorphous metals to cool extremely fast after melting which can optimally be realized with a device according to the present invention.

Additionally at least on temperature sensor for measuring the temperature can be disposed in the build space.

A temperature sensor, for example a thermocouple, is an electrical device consisting of two dissimilar electrical conductors forming electrical junctions at differing temperatures. A thermocouple produces a temperature-dependent voltage as a result of the thermoelectric effect, and this voltage can be interpreted to measure temperature. The sensor measures the output temperature of the build space being controlled. The measurement is used to provide corrective feedback helping to achieve the desired temperature level.

Furthermore a control unit can be provided for controlling the cooling device and therefore a cooling speed of a component during manufacturing based on comparing a measured value of temperature with a desired set value.

In the simplest type of an automatic control loop, a controller compares a measured temperature value of the process with a desired set value, and processes the resulting error signal to change some input to the process, in such a way that the process stays at its set temperature point despite disturbances.

The build platform and the housing can have a circular or an angular shape from a top view.

According to a further aspect of the present invention a device for additive manufacturing is provided comprising a powder delivery system comprising a storage cylinder for metal powder and an application device for applying the powder onto a build platform, and a heat source which is a device for generating a laser beam for a powder bed method, and a production cylinder as mentioned above. Alternatively the present invention can also be applicable for additive manufacturing using plasma or an arc as a heat source for melting the powder.

The same advantages mentioned in connection with the cooling device apply mutatis mutandis to a method according to the present invention for cooling a build space for additive manufacturing using metal powder.

Furthermore a method according to the present invention is provided for cooling a build space for additive manufacturing using metal powder wherein the build space is defined by a build platform and a wall of a housing and wherein the build space is cooled via a cooling chamber of a cooling device which is integrated in the wall of the housing and thereby controlling the cooling speed of a component during manufacturing.

According to this method for additive manufacturing a part is built by selectively sintering or melting a material and building a part additively layer by layer using a heat source sintering or melting the material, wherein the process can be conducted in a process chamber which can optionally be purged with a purging gas,

The heat generated in the build space by melting the metal powder can be transferred to a cooling medium disposed in the cooling chamber.

The method comprises the further steps of, providing a metal powder on the build platform, melting the metal powder with a heat source, and repeating the aforementioned steps.

The metal powder is preferably amorphous and has a diameter in the range of 1 µm to 100 µm or in the range of 10 µm to 80 µm and preferably in the range of 20 µm to 60 µm and is provided via a powder bed. In other words the metal has a diameter in the of at least 1 µm, 10 µm, 20 µm, 30 µm, 40 µm, 50 µm or 60 µm and a maximum diameter of 100 µm, 90 µm, 80 µm, 70 µm, 60 µm, 50 µm or 40 µm.

Alternatively other additive manufacturing techniques can be used in connection with the present invention using balls, granulate or pellets.

Before and/or during and/or after the melting process a process gas, e.g. a reactive gas or a reducing gas can be provided to the powder bed for avoiding an oxidation of the component. For example an inert gas like helium, argon or nitrogen can be used for this purpose. By adding hydrogen it is possible to absorb smallest amounts of oxygen.

The invention provides for the first time a method using a cooling chamber placed around a built platform either as walls or as coils incorporated in the wall of a housing of a production cylinder in order to fit to the form of the platform.

By using this method, the cooling speed of the material can be increased and controlled.

The invention is explained below with the aid of the embodiments shown in the drawings and some variants thereof. The drawings show in:
- Figure 1: a rough schematic view of a device for additive manufacturing according to an embodiment of the present invention, and
- Figure 2: a schematic view of the device according to the present invention according to a second embodiment.

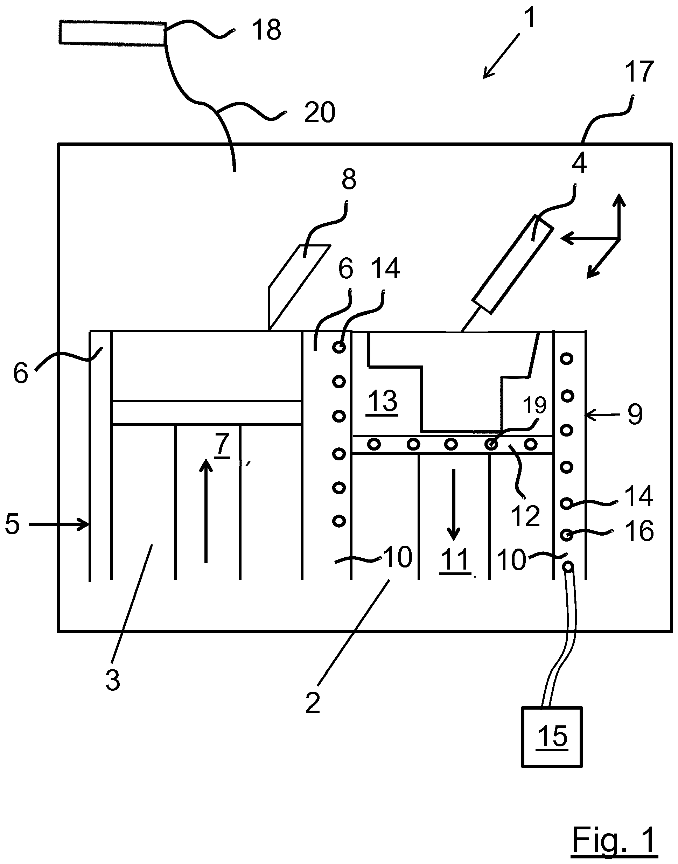

Hereinafter a device for additive manufacturing 1 according to the present invention is explained with reference to a first embodiment (Figure 1).

The device 1 comprises a production cylinder 2, a delivery cylinder 3 and a heat source 4.

The heat source 4 comprises, according to a preferred embodiment, a laser and a corresponding scanner system for melting metal powder (not shown).

The delivery cylinder 3 comprises a housing 5 with a wall 6 wherein a powder delivery piston 7 is disposed inside the housing 5.

A powder applying device 8, for example a roller, is provided for pushing a metal powder from the delivery cylinder 3 to the production cylinder 2.

The production cylinder 3 comprises a housing 9 with a wall 10.

A lift table 11 with a built platform 12 is disposed inside the wall 10 of the housing 9. The lift table 11 and the corresponding built platform 12 embody a fabrication piston.

The wall 10 of the housing 9 and the built platform 12 of the lift table 11 of the production cylinder 2 define a built space 13.

According to the present invention a cooling chamber 14 of a cooling device 15 is incorporated in the wall 10 of the housing 9 surrounding the built platform 12.

According to this embodiment the cooling chamber 14 of the cooling device 15 is embodied as a cooling coil 16 incorporated in the wall 10 of the housing 9. A second cooling chamber which is also a coil is incorporated in the build platform 12.

The cooling coil 16 is connected to a supplying unit for providing a cooling medium (not shown).

The built space 13 houses the fabrication powder bed and therefore the object being fabricated.

The cooling medium is liquid nitrogen, liquid helium, liquid argon, liquid hydrogen dry ice or liquid carbon dioxide or argon or nitrogen or a cold gas or a forming gas which is a mixture from nitrogen (N₂) or argon (Ar) and hydrogen (H₂).

The built platform 12 can be an integral part of the lift table 11 of the fabrication piston or a separate part connected to the lift table.

According to this embodiment the built platform 12 and the housing 9 have a circular shape from a top view. Alternatively the built platform 12 and the housing 9 can have an angular shape from a top view.

Furthermore, the device can be disposed in a processing chamber 17.

A device for providing a process gas 18 can be connected to the processing chamber 19 via a corresponding conduit 20.

As a process gas a reducing or reacting gas can be used in order to avoid oxidation of the built-up component.

Additionally at several temperature sensors (not shown) for measuring the temperature are disposed in the build space.

As temperature sensors thermocouples are used consisting of two dissimilar electrical conductors forming electrical junctions at differing temperatures. The thermocouples produce temperature-dependent voltages as a result of the thermoelectric effect, and this voltage is interpreted to measure temperature. The sensor measures the output temperature of the build space being controlled. The measurement is used to provide corrective feedback helping to achieve the desired temperature level.

Furthermore a control unit (not shown) is provided for controlling the cooling device and therefore a cooling speed of a component during manufacturing based on comparing a measured value of temperature with a desired set value.

In the simplest type of an automatic control loop, a controller compares a measured temperature value of the process with a desired set value, and processes the resulting error signal to change some input to the process, in such a way that the process stays at its set temperature point despite disturbances.

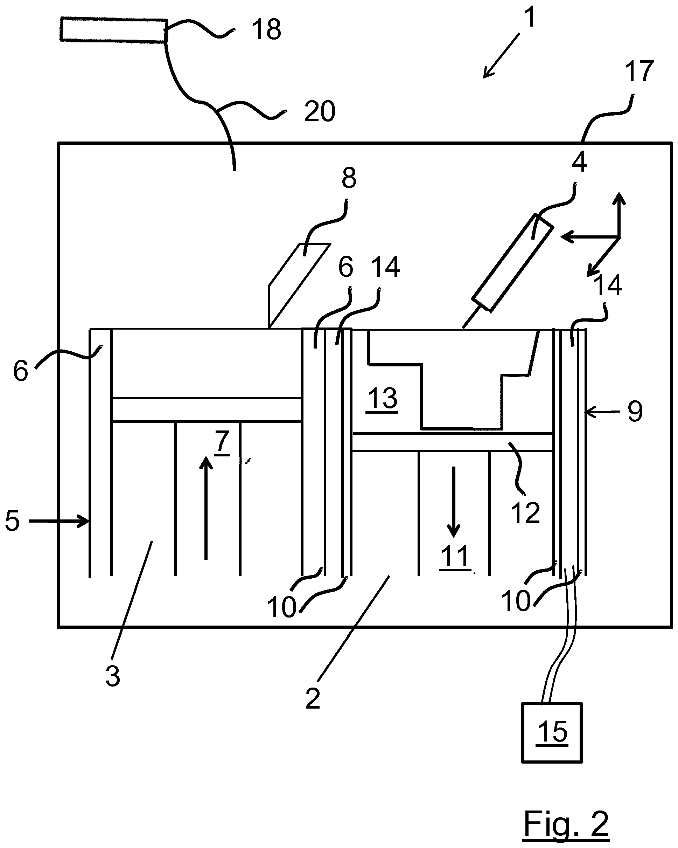

In the following the device according to the present invention is described in view of a second embodiment of the present invention (Figure 2).

Unless otherwise stated, all technical features described in connection with the first embodiment do also apply to the second embodiment.

The cooling chamber 14 according to the second embodiment is embodied as a cooling space which is a circular ring from a top view disposed in the wall 10 of the housing 9 of the production cylinder 2.

This cooling chamber 14 is also connected to a corresponding supplying unit for providing a cooling medium to the cooling chamber 14.

The built platform in laser-powdered bed fusion like in the present invention is a metal plate of about 50 mm thickness where the additive manufactured parts/components are processed.

The cooling chamber, for example made of copper, is filled with the cooling medium like LIN or a cold gas.

The built platform is at process temperature (room temperature at the start and then elevated temperature tool due to the ongoing process and the molten metal). Furthermore a method according to the present invention is provided for cooling a build space for additive manufacturing using metal powder wherein the build space is defined by a build platform and a wall of a housing and wherein the build space is cooled via a cooling chamber of a cooling device which is integrated in the wall of the housing and thereby controlling the cooling speed of a component during manufacturing.

In the following a method according to the present invention is described, especially with respect to the two embodiments of the present invention described above.

Unless otherwise stated, all technical features described in connection with the embodiments of the device are applicable in connection with method steps for the method according to the present invention.

According to the present invention a method is provided for cooling a build space of a device for additive manufacturing using metal powder.

By this method for additive manufacturing a part is built by selectively sintering or melting a material and building a part additively layer by layer using a heat source sintering or melting the material, wherein the process can be conducted in a process chamber which can optionally be purged with a purging gas,

The method comprises the steps of:
providing a metal powder on the build platform,
melting the metal powder with a heat source,
wherein a build space is defined by a build platform and a wall of a housing and
wherein the build space is cooled via a cooling chamber of a cooling device which is integrated in the wall of the housing and thereby controlling the cooling speed of a component during manufacturing.

The heat generated in the build space by melting the metal powder is transferred to a cooling medium disposed in the cooling chamber.

Then the aforementioned steps are repeated.

Optionally a process gas can be used and/or a processing chamber can be purged with a corresponding purging gas.

The invention provides for the first time a method using a cooling chamber placed around a built platform either as walls or as coils incorporated in the wall of a housing of a production cylinder in order to fit to the form of the platform.

By using this method, the cooling speed of the material can be increased and controlled.

### List of Reference Numbers

- 1: device
- 2: production cylinder
- 3: delivery cylinder
- 4: heat source
- 5: housing
- 6: wall
- 7: powder delivery piston
- 8: powder applying device
- 9: housing
- 10: wall
- 11: lift table
- 12: build platform
- 13: build space
- 14: cooling chamber
- 15: cooling device
- 16: cooling coil
- 17: processing chamber
- 18: process gas device
- 19: second cooling chamber

## Claims

1. Production cylinder for additive manufacturing using metal powders comprising a housing (9) with a wall (10),
a lift table (11) with a build platform (12) disposed inside the wall (10) of the housing (9),
wherein the wall (10) of the housing (9) and the build platform (12) define a build space (13),
**characterized in that**,
a cooling chamber (14) of a cooling device (15) is incorporated in the wall of the housing (5) surrounding the build platform (12).

2. Production cylinder according to claim 1,
**characterized in that**
the cooling chamber (14) of the cooling device (15) is embodied as a cooling space and/or a cooling duct and/or a cooling coil (16) and wherein the cooling chamber (14) of the cooling device (15) is connected to a supplying unit for providing a cooling medium, wherein the cooling medium is liquid nitrogen, liquid argon, liquid helium, liquid hydrogen dry ice or liquid carbon dioxide or argon or a cold gas or a forming gas which is a mixture from nitrogen (N₂) or argon (Ar) and hydrogen (H₂).

3. Production cylinder according to claims 1 or 2,
**characterized in that**
a further cooling chamber of the cooling device (15) is incorporated in the build platform (12) and/or in the lift table (11) .

4. Production cylinder according to claims 1 to 3,
**characterized in that**,
at least on thermocouple for measuring the temperature is provided in the build space and wherein a control unit is provided for controlling the cooling device and therefore a cooling speed of a component during manufacturing based on comparing a measured value of temperature with a desired set value

5. Production cylinder according to claims 1 to 4,
**characterized in that**,
the build platform (12) and the housing (5) have a circular or an angular shape from a top view.

6. Device for additive manufacturing comprising
a powder delivery system comprising a delivery cylinder (3) for metal powder and an application device for applying the powder onto a build platform (12),
a heat source (4) which is a device for generating a plasma or an arc for melting the powder or a laser beam, and
a production cylinder (2) according to claims 1 to 5.

7. Method for cooling a build space for additive manufacturing using metal powder wherein a build space (13) is defined by a build platform (12) and a wall (10) of a housing (9)
**characterized in that**,
the build space (12) is cooled via a cooling chamber (14) of a cooling device (15) which is integrated in the wall (10) of the housing (9) and thereby controlling the cooling speed of a component during manufacturing.

8. Method according to claim 7,
**characterized in that**,
the heat generated in the build space (12) by melting the metal powder is transferred to a cooling medium disposed in the cooling chamber, wherein the cooling medium is liquid nitrogen, liquid argon, liquid helium, liquid hydrogen dry ice or liquid carbon dioxide or argon or a cold gas or a forming gas which is a mixture from nitrogen (N₂) or argon (Ar) and hydrogen (H₂).

9. Method according to claims 7 or 8,
**characterized in that**
the metal powder is an amorphous metal having a diameter of at least 1 µm, 10 µm, 20 µm, 30 µm, 40 µm, 50 µm or 60 µm and a maximum diameter of 100 µm, 90 µm, 80 µm, 70 µm, 60 µm, 50 µm or 40 µm.

10. Method according to claims 7 to 9,
**characterized in that**,
the method comprises the further steps of,
providing a metal powder on the build platform (12), melting the metal powder with a heat source (4), and repeating the aforementioned steps.
